# FASCICULE DE BREVET EUROPEEN

(11) **EP 0 644 630 B1**
(45) Date de publication et mention de la délivrance du brevet: **13.05.1998**
(21) Numéro de dépôt: 94402063.5
(22) Date de dépôt: 15.09.1994
(51) Int. Cl.: H01R 39/14

(54) **Collecteur rapporté pour alternateur notamment de véhicule automobile**
Kollektor für einen Wechselstromgenerator, insbesondere für ein Kraftfahrzeug
Collector for an alternator, especially for a motor vehicle

(30) Priorité: 16.09.1993 FR 9311042
(43) Date de publication de la demande: 22.03.1995
(73) Titulaire: VALEO EQUIPEMENTS ELECTRIQUES MOTEUR, 94000 Créteil (FR)
(72) Inventeur: Rondier, Patrick, F-95360 Montmagny (FR)
(74) Mandataire: Martin, Jean-Jacques

(56) Documents cités:
- EP-A- 0 094 163
- DE-A- 3 510 489
- DE-U- 8 814 194

## Description

La présente invention concerne d'une façon générale les alternateurs en particulier pour véhicules automobiles.

Elle concerne plus particulièrement un nouvel agencement de bagues collectrices pour l'enroulement d'excitation d'un tel alternateur.

De façon classique, lors de la fabrication d'un alternateur, les bagues collectrices sont réalisées directement sur une partie débordante de l'arbre d'alternateur.

Une autre technique connue consiste à réaliser le collecteur sous forme d'une pièce séparée, par exemple par surmoulage, et à rapporter ensuite cette pièce sur l'arbre d'alternateur, par exemple par emmanchement à force.

Un tel collecteur rapporté connu est réalisé par surmoulage de matière isolante sur des éléments électriquement conducteurs, et comprend une première partie généralement cylindrique comportant à sa surface extérieure deux bagues collectrices, une deuxième partie comportant deux éléments de connexion avec les extrémités de fils d'un bobinage, et une partie intermédiaire de liaison électrique et mécanique entre les première et deuxième parties, comprenant deux bras constitués chacun d'une partie conductrice de liaison entre bague et élément de connexion noyée dans la matière isolante.

On connaît également par le document DE-A-35 10 489 un collecteur rapporté tel que défini dans le préambule de la revendication 1, comportant deux bras rectilignes rejoignant une partie en forme d'anneau.

L'invention vise à proposer un collecteur rapporté perfectionné, et notamment qui nécessite moins de matière isolante tout en assurant un excellent positionnement des éléments de connexion, et qui facilite la préhension et l'orientation de la pièce lors d'un montage robotisé, en assurant un guidage lors de ce montage.

L'invention propose ainsi un collecteur rapporté tel que défini dans la revendication 1.

L'invention propose également un alternateur équipé d'un collecteur tel que défini ci-dessus.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue en coupe axiale, selon la ligne I-I de la figure 4, d'une pièce destinée à former un collecteur pour alternateur selon l'invention,
la figure 2 est une vue en bout selon la flèche II de la figure 1,
la figure 2a est une vue à échelle agrandie d'une partie de la figure 2,
la figure 3 est une vue en coupe transversale selon la ligne III-III de la figure 1,
la figure 4 est une vue en bout selon la flèche IV de la figure 1,
la figure 5 est une vue en coupe axiale selon la ligne V-V de la figure 4,
la figure 6 est une vue en élévation selon la flèche VI de la figure 4,
la figure 7 est une vue en perspective arrachée de la pièce des figures 1 à 6,
la figure 8 est une vue en perspective non arrachée de la pièce des figures 1 à 7,
la figure 9 est une vue en perspective de la pièce des figures 1 à 8 terminée et montée sur un alternateur,
la figure 10 est une vue en coupe axiale verticale d'une partie d'un premier type d'alternateur équipé de la pièce des figures 1 à 8, et
la figure 11 est une vue en coupe axiale verticale d'une partie d'un deuxième type d'alternateur équipé de la pièce des figures 1 à 8.

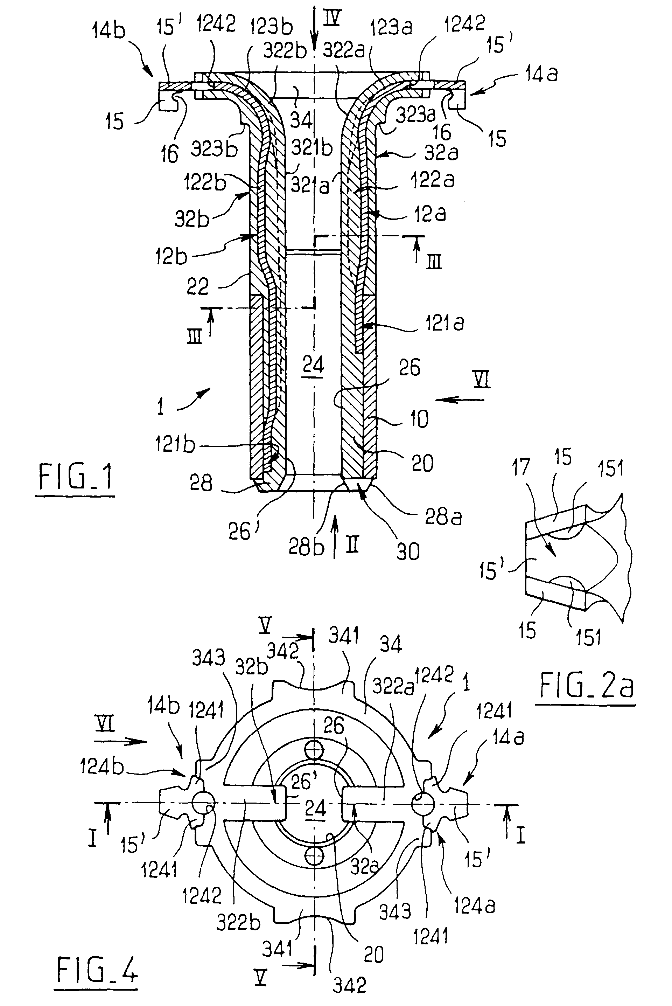

En référence tout d'abord aux figures 1 à 8, on a représenté une pièce formant collecteur pour alternateur, à une étape intermédiaire de sa fabrication.

La pièce, globalement indiquée en 1, est réalisée par surmoulage de matière plastique, de préférence thermodurcissable, sur des parties conductrices, par exemple en cuivre, destinées à former de première part deux bagues cylindriques de contact avec des balais, de deuxième part deux éléments de connexion avec deux extrémités d'un bobinage de rotor de l'alternateur, et de troisième part deux éléments de liaison électrique entre les deux bagues et les deux éléments de connexion.

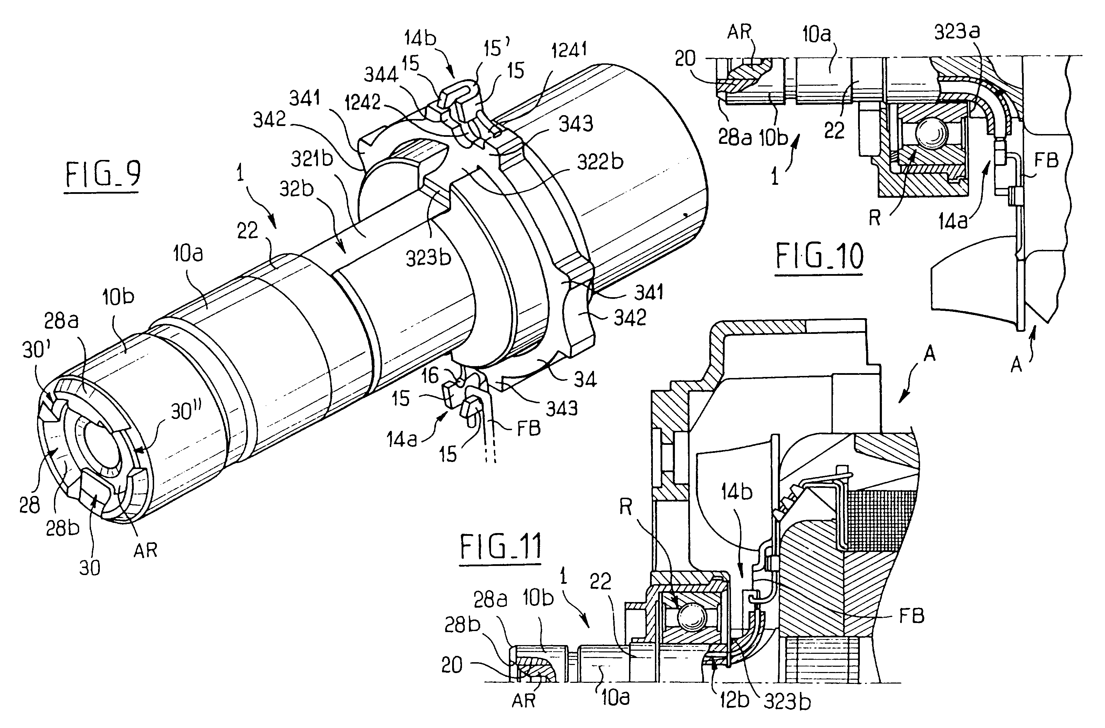

De façon conventionnelle, les bagues cylindriques sont initialement constituées d'un cylindre creux unique 10 en cuivre qui, à la fin de la réalisation de la pièce, est tronçonné circulairement sur toute son épaisseur dans sa région médiane pour former les deux bagues 10a, 10b électriquement isolées l'une de l'autre (figure 9).

Les éléments de connexion, respectivement 14a, 14b, comprennent deux pattes en vis-à-vis 15, 15 qui définissent entre elles un canal central évasé 17 et qui sont reliées entre elles par une partie 15' en forme de secteur de tronc de cône, définissant le fond du canal. Ce canal est destiné à recevoir une extrémité du bobinage. L'élément de liaison associé, respectivement 12a, 12b, s'étend radialement vers l'intérieur à partir du côté le plus étroit de la partie 15.

Chaque patte 15 présente, dans la région du fond du canal et sur son bord tourné radialement vers l'intérieur, une encoche en l'espèce semi-circulaire 16.

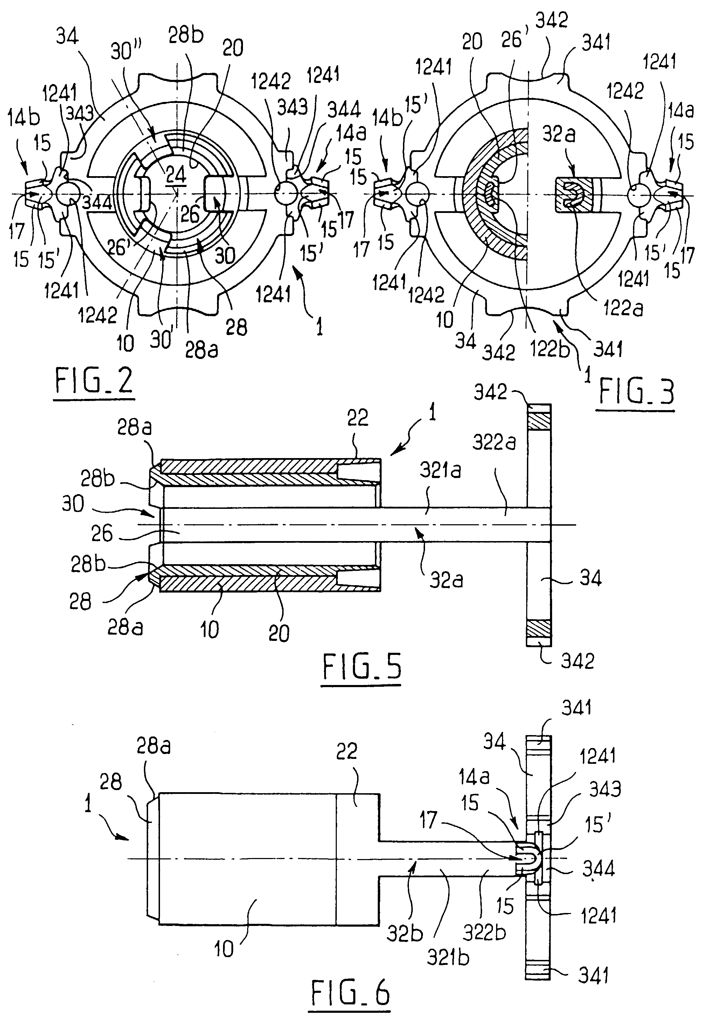

En outre, comme on le voit mieux sur la figure 2a, chaque patte 15 présente sur sa face intérieure un bossage généralement arrondi 151, réalisé de préférence par emboutissage, à des fins expliquées plus loin.

La figure 9 illustre l'extrémité d'un fil de bobinage FB qui a été mise en place dans l'élément de connexion 14a, la pièce 1 occupant en l'espèce une position angulaire telle que les deux élements de connexion 14a, 14b soient alignés verticalement. Le fil est coudé sur 180° et son extrémité libre, descendante, est engagée dans le canal défini entre les pattes 15, tandis que son coude vient se loger dans l'une des encoches 16.

Ensuite, un sertissage ou pincement est réalisé en rapprochant à l'aide d'un outil les deux pattes 15, qui viennent pincer la partie d'extrémité libre du fil, cette étape étant suivie par un soudage par exemple électrique. On observera que la présence des bossages 151 permet, dans le cadre d'une connexion automatisée, de détecter facilement le degré de pincement des fils adéquat pour qu'ensuite l'opération de soudage électrique s'effectue de façon satisfaisante. Plus précisément, les bossages permettent d'éviter qu'au cours du pincement les bords vifs des pattes 15 ne viennent sectionner le fil.

La construction de l'élément de connexion tel que 14a présente de nombreux avantages.

Tout d'abord, la forme évasée du canal délimité par les pattes 15 et le fond 15' exerce un effet de guidage lors de l'introduction de l'extrémité libre du fil. Cette forme évasée permet par ailleurs, du fait que le canal 17 présente sa largeur la plus grande au niveau de la liaison de l'élément 14a ou 14b avec le reste de la pièce métallique, de limiter les phénomènes de striction lors du pliage des pattes 15 pour exercer le pincement.

Ensuite, avant le pincement à l'aide des pattes 15, l'encoche 16 qui reçoit la région coudée du fil assure une stabilisation du fil dans la position illustrée sur la figure 9, en empêchant en particulier celui-ci de se dégager du canal par son côté ouvert.

Enfin, les pattes 15 assurent un pincement ferme mais non tranchant du fil, pour assurer une bonne tenue mécanique avant l'étape de soudage.

On observera ici qu'un élément pince-fil tel que décrit ci-dessus peut tout à fait s'appliquer à des domaines autres que celui de la connexion électrique d'un collecteur à un bobinage d'alternateur.

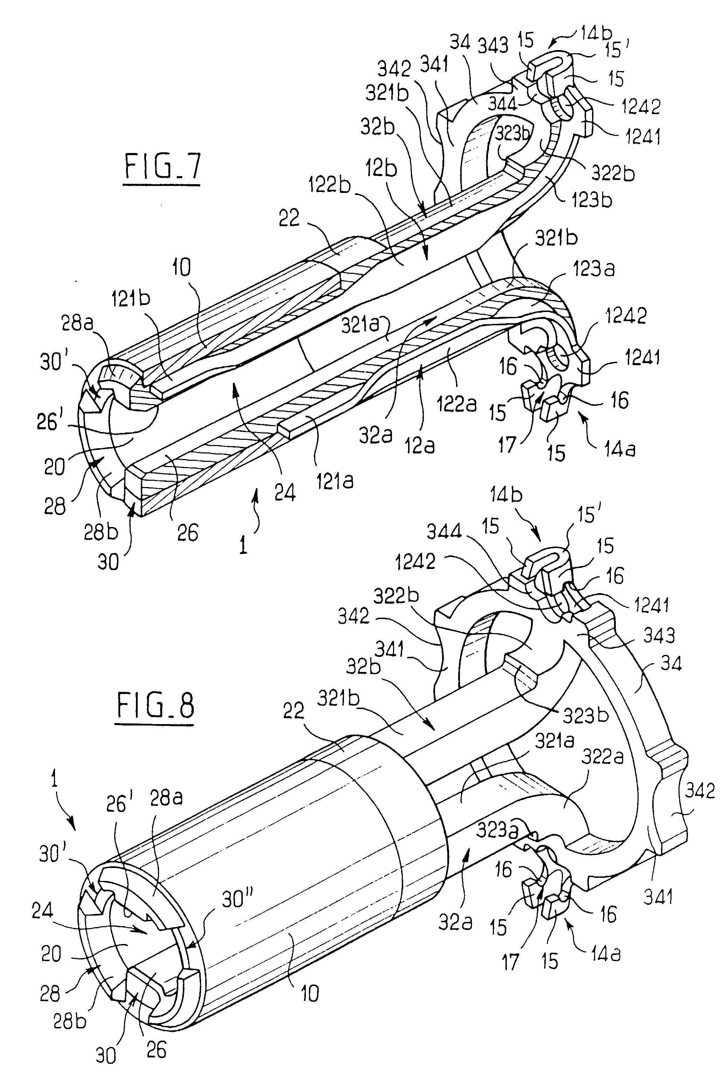

Enfin les éléments de liaison 12a, 12b comprennent chacun une partie en forme de portion de cylindre, respectivement 121a, 121b, soudée sur la face intérieure de la partie 10 destinée à former les bagues, une première partie intermédiaire généralement droite, respectivement 122a, 122b, dont la section est en forme de U au moins sur une partie substantielle de sa longueur (voir en particulier figure 3, partie de droite, et figure 7), et décalée radialement vers l'intérieur par rapport à la partie associée respective 121a, 121b, et une deuxième partie intermédiaire, de section plate, courbée sur un angle d'environ 90°, respectivement 123a, 123b, dont l'extrémité orientée radialement se prolonge dans l'élément de connexion respectif 14a, 14b. Les variations de profil des parties 121a-123a et 121b-123b s'effectuent progressivement.

On observera ici que les parties 121a, 121b sont soudées à la partie 10 respectivement dans sa région proche et dans sa région éloignée des éléments de liaison 12a, 12b, de telle manière qu'après le tronçonnage précité, l'élément de connexion 14a soit uniquement relié à la bague 10a, et que l'élément de connexion 14b soit uniquement relié à la bague 10b.

On notera également que la section en U des parties intermédiaires droites permet d'accroitre la rigidité de celles-ci, afin de minimiser tout risque d'écart de positionnement intempestif au cours de l'étape de surmoulage, et en particulier d'éviter tout risque de court-circuit entre la partie du cylindre 10 qui deviendra la bague intérieure 10a et la partie intermédiaire adjacente 122b.

On observe en outre que chaque partie intermédiaire courbe 123a, 123b comporte, au voisinage de l'élément de connexion respectif 14a, 14b, une région plus large, respectivement 124a, 124b, définissant deux pattes latérales d'ancrage 1241 et dans laquelle est formé un trou traversant circulaire 1242. Ce trou est destiné à coopérer avec des aménagements (fixes ou mobiles) du moule de manière à précisément positionner les éléments de connexion 14a, 14b au cours de l'étape de surmoulage.

On va maintenant décrire la partie en matière plastique obtenue après l'étape de surmoulage des parties conductrices précitées.

On trouve tout d'abord une partie 20 de forme générale cylindrique, qui s'étend à l'intérieur du cylindre en cuivre 10 en recouvrant entièrement sa face intérieure ainsi que les plaquettes conductrices 121a, 121b et les tronçons des parties intermédiaires 122a, 122b situées à l'intérieur dudit cylindre. Ce cylindre 20 est prolongé, en direction des éléments de connexion 14a, 14b par une autre partie cylindrique 22 dont la surface extérieure vient en affleurement avec la surface extérieure du cylindre en cuivre 10.

Les parties 20, 22 définissent un alésage cylindrique central 24 pourvu sur toute sa longueur de deux cannelures 26, 26' de section généralement rectangulaire, diamétralement opposées et occupant les mêmes positions angulaires, par rapport à l'axe de la pièce, que les éléments de connexion 14a, 14b.

Cet alésage cannelé est destiné à recevoir un arbre, de forme complémentaire, de l'alternateur, sur lequel la pièce 1 est emmanchée à force.

Du côté opposé à la partie cylindrique 22, la partie cylindrique 20 se prolonge par une petite collerette 28 à bords extérieur et intérieur biseautés, respectivement 28a et 28b. Entre le bord extérieur biseauté 28a et le cylindre en cuivre 10, la partie 28 présente une surface cylindrique légèrement en retrait de la surface extérieure dudit cylindre 10.

Dans cette partie 28 sont ménagées trois encoches 30, 30' et 30'' dont la profondeur est égale à la longueur de la partie 28 en direction axiale, c'est-à-dire que le fond de ces encoches laisse apparaître le bord du cylindre en cuivre.

L'une de ces trois encoches 30 est alignée sur la cannelure inférieure 26, tandis que les deux autres, 30' et 30", sont décalées angulairement en l'espèce de 120° de part et d'autre de l'encoche 30.

On comprend que le cylindre en cuivre 10 est fermement emprisonné en direction axiale entre les parties 22, 28 en matière plastique.

Les encoches 30, 30', 30'' ont un double rôle. Tout d'abord, l'emmanchement à force de la pièce 1 sur l'arbre de l'alternateur s'effectue, par exemple de manière automatisée, en exerçant un effort axial très important sur la pièce 1 du côté de la partie 28. Les encoches 30, 30', 30'' sont destinées à recevoir trois doigts de pression de l'automate, qui de la sorte vont exercer l'effort sur la pièce en agissant non pas sur ses parties en matière plastique, mais sur le bord, tourné vers la partie 28, du cylindre métallique 10. De la sorte, cet effort est exercé sans risque de détérioration de la matière plastique de la pièce, dont la résistance mécanique est bien entendu nettement inférieure à celle du cuivre.

En outre, les encoches 30, 30', 30'' permettent d'assurer un détrompage quant au positionnement angulaire de la pièce 1 sur l'alternateur avant son emmanchement.

On notera ici que les deux extrémités du bobinage de rotor de l'alternateur correspondent respectivement à un côté intérieur du bobinage ("entrée de courant") et à un côté extérieur du bobinage ("sortie de courant").

Dans la technique antérieure, on connectait l'une de ces extrémités de fils indifféremment à l'une des bagues 10a, 10b, et l'autre extrémité à l'autre bague.

Il a cependant été constaté que le comportement de l'alternateur en présence de perturbations électromagnétiques rayonnées par exemple par les émissions radio, et tout particulièrement dans la bande de la modulation de fréquence, était influencé de façon significative par la façon dont les extrémités du bobinage d'excitation étaient raccordées aux potentiels fournis par le circuit régulateur de l'alternateur. Plus précisément, on va faire en sorte que l'extrémité intérieure du bobinage (la plus proche de l'arbre de l'alternateur, correspondant au début du bobinage lors de sa confection) soit raccordée à la borne du régulateur qui délivre un potentiel fixe, correpondant à l'une bien déterminée des bagues 10a, 10b tandis que la borne du régulateur délivrant le potentiel variable, correspondant à l'autre bague du collecteur, sera raccordée à l'extrémité extérieure du bobinage (fin du bobinage).

Les encoches 30, 30', 30'' permettent de réaliser l'appairement de ces raccordements, la position angulaire correcte de la pièce 1, parmi ses deux positions possibles décalées de 180°, étant déterminée par exemple au moyen d'un ou plusieurs palpeurs associés à l'équipement robotisé de montage, ou encore visuellement lors d'opérations manuelles.

La pièce 1 après surmoulage comprend en outre deux branches en matière plastique 32a, 32b dans lesquelles sont entièrement noyées les parties conductrices de raccordement 122a, 123a et 122b, 123b, respectivement, et une partie en forme d'anneau 34 d'axe confondu avec celui des parties cylindriques 10, 20, 22, reliée à ces parties par lesdites branches et se situant au niveau des éléments de connexion 14a, 14b.

Plus précisément, chaque branche 32a, 32b comprend un tronçon rectiligne, respectivement 321a, 321b, et un tronçon courbé sur 90°, respectivement 322a, 322b, épousant la forme des parties intermédiaires courbes 123a, 123b en matériau conducteur.

Les branches 32a, 32b viennent se raccorder radialement et en des positions diamétralement opposées à l'anneau 34, au niveau des éléments de connexion 14a, 14b.

On observe que chaque branche 32a, 32b, dans la région de transition entre son tronçon rectiligne et son tronçon courbé, présente un décrochement vers l'extérieur noté respectivement 323a, 323b.

La face intérieure de chaque tronçon rectiligne 321a, 321b se situe dans le prolongement, en direction axiale, de la face intérieure d'une cannelure 26, 26' de l'alésage 24, tandis que la face extérieure de chaque tronçon rectiligne présente un profil en forme d'arc de cercle et se situe dans le prolongement, en direction axiale, de la face externe de la partie 22.

L'anneau 34 comporte, en deux positions diamétralement opposées et décalées de 90° par rapport aux éléments de connexion 14a, 14b, deux surépaisseurs 341 dirigées vers l'extérieur, et dans la surface externe desquelles sont formés respectivement deux renfoncements légèrement concaves 342.

Deux autres surépaisseurs 343, également dirigées vers l'extérieur, sont formées dans l'anneau 34 au niveau des éléments de connexion 14a, 14b, de manière à emprisonner partiellement les pattes d'ancrage 1241. Dans ces surépaisseurs 343 sont également formés respectivement deux renfoncements 344 permettant de laisser les trous circulaires 1242 dégagés.

La réalisation de l'anneau 34 au cours de l'étape de surmoulage permet de rigidifier la pièce 1 dans la région des éléments de connexion 14a, 14b, en garantissant que leur distance mutuelle en direction radiale soit bien déterminée. En effet, la présence du ventilateur de l'alternateur non loin de ces éléments 14a, 14b après emmanchement de la pièce exige de positionner ces éléments de façon précise en direction radiale. Par ailleurs, l'anneau 34 permet de bien garantir l'absence de tout contact entre les éléments 14a, 14b et une partie élargie AR1 de l'arbre d'alternateur AR (voir figure 9), autour de laquelle l'anneau vient se positionner, notamment lors de phénomènes de dilatation dûs à l'échauffement ou de l'accumulation de poussières dans cette région de l'alternateur.

En outre, l'injection de la matière de surmoulage s'effectue préférentiellement au niveau de cet anneau, et en particulier au niveau des surépaisseurs 341.

En outre, les surfaces concaves 342 prévues latéralement et de façon diamétralement opposée servent à la préhension de la pièce par un robot en vue de l'emmanchement à force sur un arbre d'alternateur. Ainsi la pièce peut être saisie selon deux orientations possibles, décalées mutuellement de 180°, et l'on a indiqué plus haut comment les encoches 30, 30', 30'' permettaient d'assurer un détrompage pour choisir l'orientation qui convient pour alimenter le bobinage avec la polarité correcte.

On notera également que les décrochements 323a, 323b, qui font saillie radialement vers l'extérieur de la surface cylindrique définie par le cylindre 10 et son prolongement isolant 22, permettent lors du montage de la pièce sur certains alternateurs de définir une butée axiale pour un roulement à billes prévu entre l'arbre de l'alternateur et son carter pour constituer le palier arrière de l'alternateur.

Les figures 10 et 11 représentent une pièce telle que décrite ci-dessus montée respectivement sur deux alternateurs A de modèles différents. L'arbre de l'alternateur est désigné par AR, et un roulement pour cet arbre par R.

On comprend le rôle de l'anneau 34, qui évite tout "flottement" des éléments de connexion 14a, 14b et tout risque de court-circuit avec des parties relativement proches de l'alternateur.

On observe également qu'une plaque latérale P du roulement R est en butée contre les épaulements 323a, 323b définis par la pièce 1.

Bien entendu, la présente invention n'est nullement limitée à la forme de réalisation décrite ci-dessus et représentée sur les dessins, mais l'homme de l'art saura y apporter toute variante ou modification dans le cadre des revendications jointes.

## Revendications

1. Collecteur rapporté pour alternateur notamment de véhicule automobile, l'alternateur comportant un arbre avec une partie de petit diamètre et une partie de plus grand diamètre, le collecteur étant réalisé par surmoulage de matière isolante sur des éléments électriquement conducteurs, et comprenant une première partie généralement cylindrique (10a, 10b, 20, 22) comportant à sa surface extérieure deux bagues collectrices (10a, 10b), une deuxième partie (34, 14a, 14b) comportant deux éléments de connexion avec les extrémités de fils (FB) d'un bobinage, et une partie intermédiaire (12a, 12b, 32a, 32b) de liaison électrique et mécanique entre les première et deuxième parties, comprenant deux bras constitués chacun d'une partie conductrice (12a, 12b) de liaison entre bague et élément de connexion noyée dans la matière isolante (32a, 32b), caractérisé en ce que la deuxième partie du collecteur comprend un anneau (34) en matière isolante venu de moulage et possédant un diamètre sensiblement supérieur à celui de ladite partie cylindrique, de manière à se positionner sur ladite partie de plus grand diamètre de l'arbre, et en ce que lesdits bras comprennent chacun un premier tronçon (321a, 321b) s'étendant dans le prolongement de ladite partie cylindrique et un deuxième tronçon (322a, 322b) s'évasant radialement jusqu'audit anneau.

2. Collecteur selon la revendication 1, caractérisé en ce que lesdits éléments de connexion (14a, 14b) s'étendent radialement vers l'extérieur dans le prolongement des bras.

3. Collecteur selon la revendication 1 ou 2, caractérisé en ce que ledit anneau (34) présente des aménagements (341, 342) de préhension par un robot.

4. Collecteur selon la revendication 3, caractérisé en ce que lesdits aménagements comprennent deux surfaces concaves (342) diamétralement opposées.

5. Collecteur selon la revendication 4, caractérisé en ce que lesdites surfaces concaves sont formées dans des surépaisseurs de matière (341) de l'anneau décalées de 90° par rapport aux éléments de connexion (14a, 14b).

6. Collecteur selon l'une des revendications 1 à 5, caractérisé en ce qu'il est prévu à la transition entre les éléments de connexion (14a, 14b) et les parties de liaison (12a, 12b) des pattes latérales (1241) ancrées dans des surépaisseurs de matière (343) de l'anneau.

7. Collecteur selon la revendication 6, caractérisé en ce qu'il est prévu à la transition entre les éléments de connexion (14a, 14b) et les parties de liaison respectives (12a, 12b) un trou pour leur positionnement avant surmoulage.

8. Collecteur selon l'une des revendications 1 à 7, caractérisé en ce que chaque bras (32a, 32b) comporte sur une face extérieure un épaulement (323a, 323b) formant butée pour un roulement (R) d'arbre de l'alternateur.

9. Collecteur selon l'une des revendications 1 à 8, caractérisé en ce que chaque partie conductrice de liaison (12a, 12b) présente au moins localement une section en forme générale de "U".

10. Collecteur selon l'une des revendications 1 à 9, caractérisé en ce que ladite première partie généralement cylindrique (10a, 10b, 20, 22) comprend une alésage central (24) dans lequel sont venues de moulage deux cannelures (26, 26') diamétralement opposées, et en ce que des surfaces intérieures et latérales desdits bras (32a, 32b) sont situées dans le prolongement de surfaces intérieures et latérales desdites cannelures.

11. Collecteur selon l'une des revendications 1 à 10, caractérisé en ce que lesdits deuxièmes tronçons 322a, 322b) des bras ont un profil en forme générale de quart de cercle.

12. Alternateur (A) notamment pour véhicule automobile, caractérisé en ce qu'il comporte sur un arbre (AR) en saillie un collecteur rapporté (1) selon l'une des revendications précédentes.

## Patentansprüche

1. Angefügter Kollektor für einen Wechselstromgenerator, insbesondere für ein Kraftfahrzeug, wobei der Wechselstromgenerator eine Welle mit einem Teil mit kleinem Durchmesser und einem Teil mit größerem Durchmesser umfaßt, wobei der Kollektor durch Aufformen von nichtleitendem Material auf elektrisch leitenden Elementen ausgeführt ist und einen allgemein zylindrischen ersten Teil (10a, 10b, 20, 22), der an seiner Außenfläche zwei Schleifringe (10a, 10b) umfaßt, einen zweiten Teil (34, 14a, 14b), der zwei Anschlußelemente für die Drahtenden (FB) einer Wicklung umfaßt, und einen Zwischenteil (12a, 12b, 32a, 32b) für die elektrische und mechanische Verbindung zwischen dem ersten und zweiten Teil enthält, der zwei Arme umfaßt, die jeweils aus einem leitenden Teil (12a, 12b) für die Verbindung zwischen Ring und Anschlußelement bestehen, der in das nichtleitende Material (32a, 32b) eingelassen ist, **dadurch gekennzeichnet**, daß der zweite Teil des Kollektors einen Ring (34) aus nichtleitendem Material umfaßt, der einstückig ausgeführt ist und einen Durchmesser besitzt, der deutlich größer als der Durchmesser des zylindrischen Teils ist, um sich auf dem besagten Teil mit größerem Durchmesser der Welle zu positionieren, und daß die besagten Arme jeweils ein erstes Teilstück (321a, 321b), das sich in der Verlängerung des besagten zylindrischen Teils erstreckt, und ein zweites Teilstück (322a, 322b) umfassen, das sich radial bis zu dem besagten Ring konisch erweitert.

2. Kollektor nach Anspruch 1 , **dadurch gekennzeichnet**, daß sich die besagten Anschlußelemente (14a, 14b) radial nach außen in der Verlängerung der Arme erstrecken.

3. Kollektor nach Anspruch 1 oder 2 , **dadurch gekennzeichnet**, daß der besagte Ring (34) Anordnungen (341, 342) für die Aufnahme durch einen Roboter aufweist.

4. Kollektor nach Anspruch 3 , **dadurch gekennzeichnet**, daß die besagten Anordnungen zwei diametral gegenüberliegende konkave Flächen (342) umfassen.

5. Kollektor nach Anspruch 4 , **dadurch gekennzeichnet**, daß die besagten konkaven Flächen in Materialerhebungen (341) des Rings ausgebildet sind, die um 90° im Verhältnis zu den Anschlußelementen (14a, 14b) versetzt sind.

6. Kollektor nach einem der Ansprüche 1 bis 5 , **dadurch gekennzeichnet,** daß am Übergang zwischen den Anschlußelementen (14a, 14b) und den Verbindungsteilen (12a, 12b) seitliche Ansätze (1241) vorgesehen sind, die in Materialerhebungen (343) des Rings verankert sind.

7. Kollektor nach Anspruch 6 , **dadurch gekennzeichnet**, daß am Übergang zwischen den Anschlußelementen (14a, 14b) und den jeweiligen Verbindungsteilen (12a, 12b) ein Loch für ihre Positionierung vor dem Aufformen vorgesehen sind.

8. Kollektor nach einem der Ansprüche 1 bis 7 , **dadurch gekennzeichnet**, daß jeder Arm (32a, 32b) auf einer Außenfläche eine Schulter (323a, 323b) umfaßt, die einen Anschlag für ein Wälzlager (R) der Welle des Wechselstromgenerators bildet.

9. Kollektor nach einem der Ansprüche 1 bis 8 , **dadurch gekennzeichnet,** daß jeder leitende Verbindungsteil (12a, 12b) zumindest örtlich einen Querschnitt mit der allgemeinen Form eines "U" aufweist.

10. Kollektor nach einem der Ansprüche 1 bis 9, **dadurch gekennzeichnet**, daß der besagte allgemein zylindriche erste Teil (10a, 10b, 20, 22) eine mittige Bohrung (24) enthält, in die einstückig zwei diametral gegenüberliegende Nuten (26, 26') eingearbeitet sind, und daß Innen- und Seitenflächen der besagten Arme (32a, 32b) in der Verlängerung von Innen- und Seitenflächen der besagten Nuten angeordnet sind.

11. Kollektor nach einem der Ansprüche 1 bis 10, **dadurch gekennzeichnet**, daß die besagten zweiten Teilstücke (322a, 322b) der Arme ein Profil mit allgemeiner Viertelkreisform haben.

12. Wechselstromgenerator (A), insbesondere für ein Kraftfahrzeug, **dadurch gekennzeichnet,** daß er auf einer vorstehenden Welle (AR) einen angefügten Kollektor (1) nach einem der vorangehenden Ansprüche aufweist.

## Claims

1. A slip ring unit for attachment to an alternator, especially for a motor vehicle, the alternator having a shaft with a portion of small diameter and a portion of larger diameter, the slip ring unit being made by moulding an insulating material on electrically conductive elements, and comprising a generally cylindrical first portion (10a, 10b, 20, 22) having two slip rings (10a, 10b) at its outer surface, a second portion (34, 14a, 14b) having two connecting elements for connection with the wire ends (FB) of a winding, and an intermediate portion (12a, 12b, 32a, 32b), for linking the first and second portions together electrically and mechanically and comprising two branches, each of which includes a conductive portion (12a, 12b) for providing a link between a slip ring and a connecting element embedded in the insulating material (32a, 32b), characterised in that the second portion of the slip ring unit comprises a ring (34) of insulating material made integrally by moulding and having a diameter which is substantially greater than that of the said cylindrical portion, whereby to position it on the said portion of larger diameter of the shaft, and in that each of the said branches has a first portion (321a, 321b) extending the said cylindrical portion, together with a second portion (322a, 322b) which radially expands up to the said ring.

2. A slip ring unit according to Claim 1, characterised in that the said connecting elements (14a, 14b) extend radially outwardly as extensions of the said branches.

3. A slip ring unit according to Claim 1 or Claim 2, characterised in that the said ring (34) has means (341, 342) adapted to be gripped by a robotic machine.

4. A slip ring unit according to Claim 3, characterised in that the said means include two diametrically opposed concave surfaces (342).

5. A slip ring unit according to Claim 4, characterised in that the said concave surfaces (342) are formed in integral thickened portions (341) of the ring, offset by 90° with respect to the connecting elements (14a, 14b).

6. A slip ring unit according to one of Claims 1 to 5, characterised in that lateral lugs (1241), anchored in integral thickened portions (343) of the ring, are arranged at the transition between the connecting elements (14a, 14b) and the linking portions (12a, 12b).

7. A slip ring unit according to Claim 6, characterised in that a hole is provided at the transition between the connecting elements (14a, 14b) and the respective linking portions (12a, 12b), for positioning the latter before the moulding operation.

8. A slip ring unit according to one of Claims 1 to 7, characterised in that each branch (32a, 32b) includes on an outer face a shoulder (323a, 323b) defining an abutment for a bearing (R) of the alternator shaft.

9. A slip ring unit according to one of Claims 1 to 8, characterised in that each conductive linking portion (12a, 12b) has, at least locally, a generally U-shaped cross section.

10. A slip ring unit according to one of Claims 1 to 9, characterised in that the said generally cylindrical first portion (10a, 10b, 20, 22) has a central bore (24) in which two diametrically opposed splines (26, 26') are formed by moulding, and in that internal and lateral surfaces of the said branches (32a, 32b) constitute extensions of internal and lateral surfaces of the said splines.

11. A slip ring unit according to one of Claims 1 to 10, characterised in that the said second portions (322a, 322b) of the branches have a profile in the general form of a quarter-circle.

12. An alternator (A), especially for a motor vehicle, characterised in that it includes a slip ring unit (1) according to one of the preceding Claims, fitted on a projecting shaft (AR).
